**Europäisches Patentamt**

**European Patent Office**

**Office européen des brevets**

(11) Veröffentlichungsnummer: **0 051 761**
A1

## EUROPÄISCHE PATENTANMELDUNG

(21) Anmeldenummer: **81108404.5**

(22) Anmeldetag: **16.10.81**

(51) Int. Cl.³: **F 16 K 21/04**

(30) Priorität: **07.11.80 DE 8029827 U**

(43) Veröffentlichungstag der Anmeldung: **19.05.82**
**Patentblatt 82/20**

(84) Benannte Vertragsstaaten: **AT DE FR IT NL SE**

(71) Anmelder: **Knorr-Bremse GmbH, Moosacher Strasse 80, D-8000 München 40 (DE)**

(72) Erfinder: **Brungs, Siegfried, Dr., Prochintalstrasse 22, D-8000 München 50 (DE)**

(54) **Rückführungsfeder für Betätigungsorgane von Ventilen, insbesondere für manuell betätigbare Ventile.**

(57) Bei Ventilen, insbesondere bei manuell betätigbaren Ventilen, ist für die selbsttätige Rückführung des Betätigungsorgans ein elastisches Rückstellelement vorgesehen, welches als Druckfeder (17) aus einem zelligen Elastomer besteht. Die Druckfeder (17) umschließt das Betätigungsorgan (3) und stützt sich sowohl am Gehäuse (1) des Ventils als auch am Betätigungsorgan ab. Die Druckfeder (17) kann aus einem zelligen Polyurethan bestehen.

0051761

Knorr-Bremse GmbH
Moosacher Str. 80
8000 München 40

München, 29.10.1980
TP1-hn/fe
- 9129 -

Rückführungsfeder für Betätigungsorgane von
Ventilen, insbesondere für manuell betätigbare
Ventile

Die Neuerung betrifft eine Rückführungsfeder nach
dem Gattungsbegriff des Schutzanspruches 1.

Bei manuell, d.h. durch die Hand oder durch den
Fuß betätigbaren Ventilen, insbesondere von Kraftfahrzeugen, wird ein kolbenartiges Betätigungsorgan je nach Beaufschlagung in einem Gehäuse verschoben und vermag je nach Schaltstellung Be- und
Entlüftungen herbeizuführen. Die Betätigungsorgane
derartiger Ventile werden in üblicher Weise durch
eine Druckfeder von im allgemeinen beträchtlicher
Länge verspannt und bei Freigabe in die Ausgangsstellung zurückgeführt. Darüber hinaus sind im
Bereich der aus dem Gehäuse sich erstreckenden
Enden derartiger Betätigungsorgane besondere Abdichtungen, so von Balgform, erforderlich, um das
Eindringen von Schmutz, insbesondere bei Verwendung
in Kraftfahrzeugen, zu verhindern.

Davon ausgehend besteht die Aufgabe der Neuerung
darin, eine Rückführungsfeder der gattungsgemäßen
Art so auszubilden, daß diese bei gedrängten baulichen Abmessungen gleichzeitig als Schmutzbalg gegen Eindringen von Staub und Schmutz verwendet werden kann. Dabei sollen derartige Rückführungsfedern trotz ihrer Doppelfunktion billig hergestellt werden können.

Die Lösung dieser Aufgabe besteht aus den Merkmalen des Kennzeichnungsteils des Schutzanspruches 1. Vorteilhafte Ausgestaltungen und Weiterbildungen sind in weiteren Schutzansprüchen enthalten.

Die aus einem zelligen Elastomer bestehende Druckfeder ist baulich einfach, d.h. sie kann aus einem längeren Schlauchstück herausgeschnitten werden; trotz geringem Balgvolumen der Druckfeder sind keine überstehenden Falten vorhanden, welche leicht beschädigt werden könnten. Bei Verwendung einer derartigen Druckfeder kann auch bei Einsatz mit erschwerten Bedingungen auf zusätzliche Dichtungsmittel verzichtet werden, da die zellige Elastomermasse unter ausreichender Abdichtung gegenüber zugeordneten Anlageflächen des Gehäuses abgestützt sein kann.

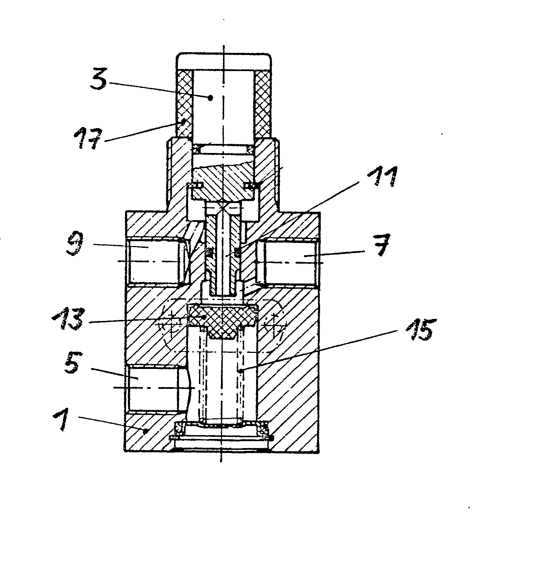

Die Neuerung ist anhand eines Ausführungsbeispieles unter Bezugnahme auf die beigefügte Zeichnung erläutert.

In der Zeichnung ist ein insbesondere für Kraftfahrzeuge, aber auch für andere Verwendungszwecke geeignetes Belüftungsventil dargestellt, bei welchem in einem Gehäuse 1 ein kolbenartiges Betätigungsorgan 3 verschiebbar geführt ist. In das Gehäuse 1 münden z.B. ein an Vorrat angeschlossener Anschluß 5, ein mit einem Verbraucher verbundener Anschluß 7 und ein zum Zwecke der Entlüftung ins Freie führender Anschluß 9.

Wird das Betätigungsorgan 3 in der Darstellung nach der Zeichnung mit der Hand oder mit dem Fuß nach unten gerichtet gedrückt, dann hebt das untere, einen Entlüftungskanal 11 enthaltende Ende des Betätigungsorgans ein Ventilelement 13 gegen die Kraft einer Feder 15 von einem Ventilsitz ab; so besteht bei gleichzeitig geschlossenem Entlüftungskanal 11 eine Verbindung zwischen dem Anschluß 5 und dem mit dem Verbraucher in Verbindung befindlichen Anschluß 7. Wird das Betätigungsorgan 3 aus zuvor genannter Stellung freigegeben, dann wird es von einer zugeordneten Rückführungsfeder in die in der Zeichnung dargestellte Lage bewegt. In dieser Lage besteht vom Anschluß 7 über den Entlüftungskanal 11, einen das Betätigungsorgan durchsetzenden Querkanal und eine weitere Gehäusebohrung Verbindung mit dem Anschluß 9, welcher in das Freie mündet. Der mit dem Anschluß 7 in Verbindung stehende Verbraucher kann auf diese Weise über den Anschluß 9 entlüftet werden.

Die Rückführungsfeder für das Betätigungsorgan 3 besteht neuerungsgemäß als eine aus zelligem Elastomer gefertigte Druckfeder 17, die sich sowohl am Gehäuse als auch an einem Anschlag oder dergleichen des Betätigungsorganes abstützt und das Betätigungsorgan in die dargestellte Position der Zeichnung zurückzuführen vermag. Die Druckfeder 17 besteht vorzugsweise als ein das Betätigungsorgan umschließender Schlauchkörper, so daß derartige Druckfedern in kostensparender Weise von einem längeren Schlauchstück abgeschnitten werden können. Die Druckfeder dichtet an der zugeordneten, gehäuseseitigen Anlagefläche ausreichend ab, um gleichzeitig als Schmutzbalg gegen das Eindringen von Staub und Schmutz zu wirken. Diese Eigenschaft erweist sich insbesondere für Ventile von Vorteil, welche mit dem Fuß betätigt werden und einer starken Schmutzbelastung innerhalb eines Fahrzeuges

4

ausgesetzt sind.

Ein weiterer Vorteil der neuerungsgemäßen Druckfeder ist in dem geringen Balgvolumen zu ersehen; auch ist es vorteilhaft, daß die Druckfeder keine überstehenden Falten aufweist, welche leicht beschädigt werden könnten. Die Druckfeder kann aus herkömmlichen, zelligen Elastomermassen gefertigt sein, so aus zelligem Polyurethan mit niedrigen Entstehungskosten.

0051761

Knorr-Bremse GmbH
Moosacher Str. 80
8000 München 40

München, 29.10.1980
TP1-hn/fe
- 9129 -

S C H U T Z A N S P R Ü C H E

1. Rückführungsfeder für Betätigungsorgane von Ventilen, insbesondere für manuell betätigbare Ventile, dadurch gekennzeichnet, daß die Rückführungsfeder aus einer das Betätigungsorgan (3) umschließenden, am Gehäuse (1) und am Betätigungsorgan sich abstützenden Druckfeder (17) aus einem zelligen Elastomer besteht.

2. Rückführungsfeder nach Anspruch 1, dadurch gekennzeichnet, daß die Druckfeder (17) die Form eines das Betätigungsorgan umschließenden, gleichzeitig als Schmutzbalg gegen Eindringen von Staub und Schmutz wirkenden Schlauchkörpers aufweist.

3. Rückführungsfeder nach einem der vorangehenden Ansprüche, dadurch gekennzeichnet, daß die Druckfeder aus einem zelligen Polyurethan besteht.

Europäisches
Patentamt

**EUROPÄISCHER RECHERCHENBERICHT**

Nummer der Anmeldung

0051761

EP 81108404.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B2 - 2 208 071 (L'OREAL)<br>* Spalte 3, Zeilen 30-51; Fig. 1,2 *<br>-- | 1,2 |
| X | FR - A - 2 034 123 (FLAMINAIRE MARCEL QUERCIA)<br>* Gesamt *<br>---- | 1,2 |

**KLASSIFIKATION DER ANMELDUNG (Int. Cl.³)**

F 16 K 21/04

**RECHERCHIERTE SACHGEBIETE (Int. Cl.³)**

A 01 K  7/00

F 16 K 21/00

F 16 K 24/00

F 16 K 31/00

G 05 G  1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 08-02-1982 | ROUSSARIAN |

EPA form 1503.1  06.78